# EUROPEAN PATENT SPECIFICATION

(11) **EP 2 520 861 B1**
(45) Date of publication and mention of the grant of the patent: **14.02.2018**
(21) Application number: 12164575.8
(22) Date of filing: 18.04.2012
(51) Int. Cl.: F23N 1/00, G05D 7/06

(54) **Field adjustable gas valves and methods of control**
Feldverstellbare Gasventile und Steuerverfahren
Soupapes de gaz réglables sur le terrain et procédés de commande

(30) Priority: 03.05.2011 US 201113099772
(43) Date of publication of application: 07.11.2012
(73) Proprietor: Emerson Electric Co., St. Louis, MO 63136 (US)
(72) Inventor: Broker, John, St. Louis, MO Missouri 63136 (US); Jensen, Ryan D., St. Louis, MO Missouri 63136 (US); Stark, Mark H., St. Louis, MO Missouri 63136 (US); Santinanavat, Michael C., St. Louis, MO Missouri 63136 (US); Blessing, Donald L., St. Louis, MO Missouri 63136 (US); Panimadai Ramaswamy, Shweta Annapurani, St. Louis, MO Missouri 63136 (US)
(74) Representative: Awapatent AB

(56) References cited:
- EP-A2- 2 146 145
- WO-A1-97/38363
- US-A- 5 062 446
- US-A1- 2008 297 288
- US-A1- 2010 179 700

## Description

### CROSS-REFERENCE TO RELATED APPLICATION

This application claims the benefit and priority of U.S. Patent Application No. 13/099,772 filed May 3, 2011.

### FIELD

The present disclosure relates to systems for control of a gas fired appliance having a gas valve, and more particularly relates to gas valves for control of gas flow to such an appliance.

### BACKGROUND

A gas-fired, warm air furnace that operates at two fixed gas flow rates is generally referred to as a two stage furnace. Two stage furnaces may be selected by homeowners over single stage furnaces because they offer increased performance and comfort.

Document EP2146145 A2 discloses a gas valve unit according to the preamble of claim

### 1. SUMMARY

This section provides a general summary of the disclosure, and is not a comprehensive disclosure of its full scope or all of its features.

According to an aspect of the present disclosure, a gas valve unit according to claim 1 is disclosed.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Fig. 1 shows a perspective view and a schematic cut-away view of one embodiment of a stepper-motor regulated gas valve control, according to the principles of the present disclosure;
FIG. 2 shows a schematic diagram of a heating system controller, shown within a heating apparatus that includes the gas valve unit in FIG. 1, according to the principles of the present disclosure;
Fig. 3 shows a cross-sectional view of a second embodiment of a gas valve unit for controlling gas flow within a heating apparatus, according to the principles of the present disclosure;
FIG. 4 shows a perspective view of the gas valve unit in FIG. 3, according to the principles of the present disclosure; and
Fig. 5 shows a schematic diagram of a valve controller for use in connection with the above gas valve unit embodiments, according to the principles of the present disclosure.

Corresponding reference numerals indicate corresponding parts throughout the several views of the drawings.

### DETAILED DESCRIPTION

Example embodiments will now be described more fully with reference to the accompanying drawings.

As explained above in the background, two stage furnaces may be selected by homeowners over single stage furnaces because they offer increased performance and comfort. But with two stage furnaces, the furnace controller is only configured to control a two stage gas valve that is operable at a fixed high gas flow rate and a fixed low gas flow rate. Such two stage gas valves are not capable of providing for adjustable gas flow rates. In multistage furnaces, a furnace controller may be configured to request operation of a modulating gas valve at a particular operating capacity level or gas flow rate. The operating capacity level requested by such furnace controllers could range from full capacity operation of the gas valve to as low as 30 percent of full capacity operation. But the gas flow rate settings for the above gas valves are typically set at the factory, and are not field adjustable. Accordingly, the inventors hereof have therefore recognized a need for an improved variable flow gas valve and associated control for such gas valves, and accordingly have disclosed exemplary embodiments of gas valve units operable for controlling the gas flow rate to a combustion apparatus.

According to aspects of the present disclosure, exemplary embodiments are disclosed of gas valve units that may be used for controlling gas flow rate to a combustion apparatus. In an embodiment, a gas valve unit according to claim 1 is disclosed.

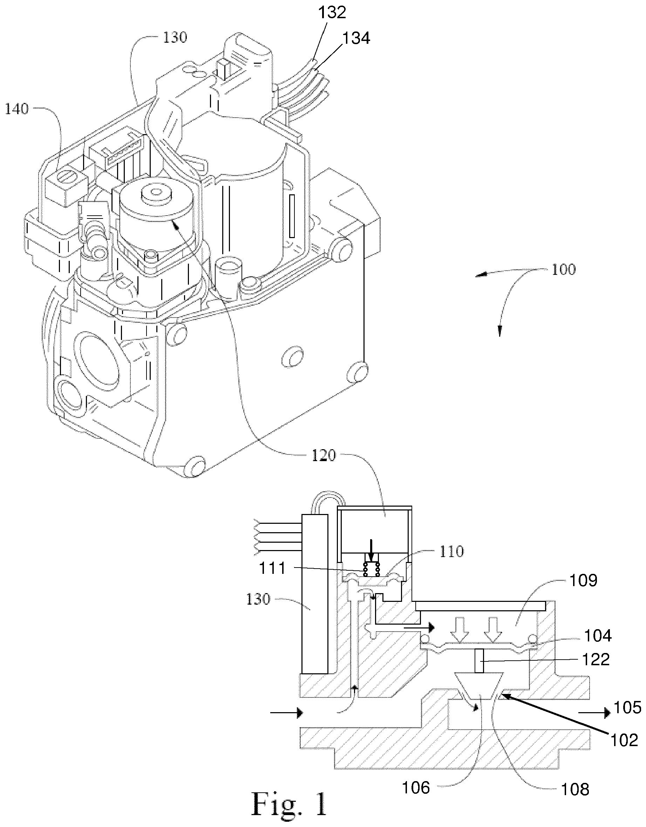

With reference to the figures, FIG. 1 illustrates an exemplary embodiment of a gas valve unit 100 embodying one or more aspects of the present disclosure. As shown, the gas valve unit 100 includes a valve member 122 that is moveable relative to a valve seat 102 in response to a magnetic field generated by a coil 120. The coil 120 is part of a stepper motor that displaces a spring 111 for adjustably biasing servo-regulator diaphragm 110, which controls the fluid pressure in chamber 109 applied to a main regulator diaphragm 104. The mechanical linkage to the valve member 122 causes the valve element 106 to move and vary an opening area 108 relative to the valve seat 102.

An input signal to the coil 120 of the stepper motor biases servo-regulator diaphragm 110 and controls the extent of movement of the valve member 122 relative to the valve seat 102, to establish a desired gas flow rate. The setting of at least one desired gas flow rate (e.g., input signal to the coil 120, etc.) may be set at the time of manufacture of the gas valve unit 100.

Various exemplary embodiments of a gas valve unit 100 are also configured to receive an activation signal, and to responsively control an input to the coil 120 to establish at least one desired gas flow rate to an outlet 105 of the gas valve unit 100. In such exemplary embodiments of a gas valve unit 100, the input to the coil 120 is controlled to establish at least a high-capacity gas flow rate to an outlet 105. In some exemplary embodiments, the gas valve unit 100 may be configured to receive a low-stage activation signal and responsively control the input signal to the coil 120 to establish a low-capacity gas flow rate to the outlet 105. The gas valve unit 100 may also be configured to receive an activation signal that includes information indicative of a particular gas flow rate, which is between the high-capacity gas flow rate and the low-capacity gas flow rate. Accordingly, various exemplary embodiments of a gas valve unit 100 are configured to establish at least one desired gas flow rate upon receiving an activation signal, which may be provided by a system controller for a heating unit as explained below.

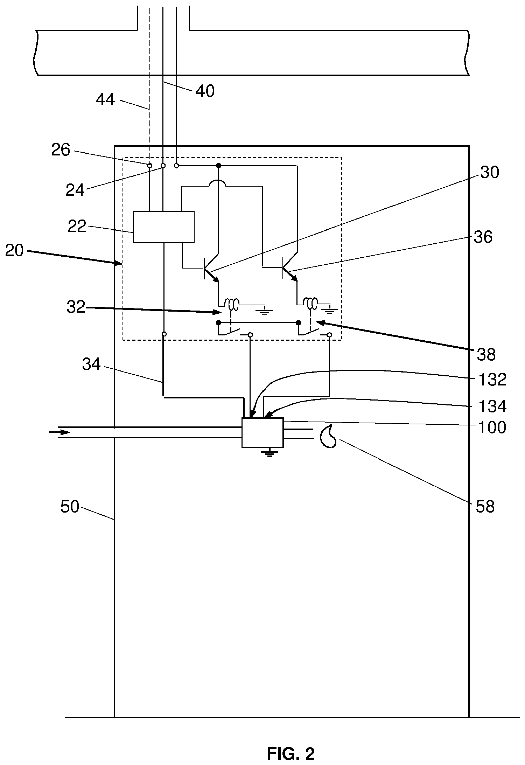

Various exemplary embodiments of a gas valve unit 100 are connectable to and operable with a system controller 20 for a furnace or heating unit 50 (FIG. 2), where the system controller 20 initiates operation of the heating unit 50 based on input signals, such as from a single-stage, two-stage, or other type of thermostat. In response to an input signal, the system controller 20 may provide an activation signal to request a high capacity gas flow rate, a low capacity gas flow rate, or a variable rate therebetween. To better illustrate the operation of exemplary embodiments of a gas valve unit, an example of a system controller 20 is shown in FIG. 2 and provided for purposes of explanation.

With continued reference to FIG. 2, the system controller 20 includes a microcontroller 22 and a first input terminal 24 for receiving a heat activation signal from a wire 40 connected to a thermostat (e.g., a "W" terminal on the thermostat). The system controller 20 may be a variable heating controller that includes a second terminal 26 for receiving a low stage heat activation signal where a two-stage thermostat is used and connected to the system controller 20 via a wire 44. In response to a thermostat activation signal, the system controller 20 will signal the gas valve unit 100 to establish a gas flow to a burner 58. Where the system controller 20 is a two-stage controller, the system controller 20 may be configured to send an activation signal to the gas valve unit 100 to establish a low-stage gas flow rate for a predetermined time period, and to thereafter signal the gas valve unit 100 to establish a high-stage gas flow rate after expiration of the time period. Such a system controller 20 may include a first switching means 30 for switching a voltage source "V" to a relay device 32 that switches voltage to a first connection 132 on the valve unit 100 to establish a low stage gas flow rate. The system controller 20 may also include a second switching means 36 for switching voltage to a relay device 38 that switches voltage to a second connection 134 on the valve unit 100 to establish a high stage full-capacity gas flow rate to the burner 58. Alternatively, the system controller 20 may provide (via wire 34) a current signal or pulse-width-modulation signal to the gas valve unit 100, to indicate a desired operating capacity level. For example, the system controller 20 may generate a 180 milliamp signal where maximum heating operation is desired, a 20 milliamp signal where minimum heating operation is desired, and any milliamp signal therebetween for variable heating operation. Accordingly, an exemplary system controller 20 may be configured to respond to one or more thermostat activation signals by signaling a gas valve unit 100 to establish a high capacity gas flow rate, a low capacity gas flow rate, or one or more variable gas flow rates therebetween.

In the exemplary embodiment shown in FIG. 1, the gas valve unit 100 is operated by a stepper-motor. The stepper-motor operated gas valve unit 100 includes a main diaphragm 104 disposed in a main regulator diaphragm chamber 109. The stepper motor includes at least one coil 120 for generating a magnetic field that biases servo-regulator diaphragm 110 for controlling fluid pressure applied to a main regulator diaphragm 104, which causes the valve member 122 and valve element 106 to move relative to the valve seat 102. The servo-regulator diaphragm 110 therefore controls the fluid pressure applied to the main regulator diaphragm 104, to control the rate of gas flow through valve opening 108 to the valve outlet 105. The coil 120 associated with the stepper motor is configured to generate a magnetic field to cause the stepper motor to move in a stepwise manner to bias the servo-regulator diaphragm 110 for regulating flow to the main regulator diaphragm 104 to thereby control the gas flow rate through the gas valve unit 100.

This exemplary embodiment accordingly includes a stepper-motor having a coil 120, which provides control over the extent of movement of the valve member 122 and valve element 106 relative to the valve seat 102 to establish operation at a low-capacity gas flow rate, or a high full-capacity gas flow rate, or even modulated gas flow between the high and low gas flow rates. As just explained for this particular embodiment shown in FIG. 1, the gas valve unit 100 includes a stepper motor in which at least one coil 120 is configured to bias servo-regulator diaphragm 110 and cause the valve member 122 to move for varying the gas flow rate. Accordingly, this exemplary embodiment illustrated in FIG. 1 is not direct-acting, in that the valve member 122 is not directly moved by the coil 120, but rather by a mechanical linkage with the main regulator diaphragm 104 that displaces the valve member 122. The particular input signal applied to the stepper motor coil 120 is that which provides a desired low-capacity gas flow rate, high-capacity gas flow rate, or a variable gas flow rate therebetween. But other exemplary embodiments of a gas valve unit are contemplated in which input to a different coil moves a valve member to vary a gas flow rate as explained below.

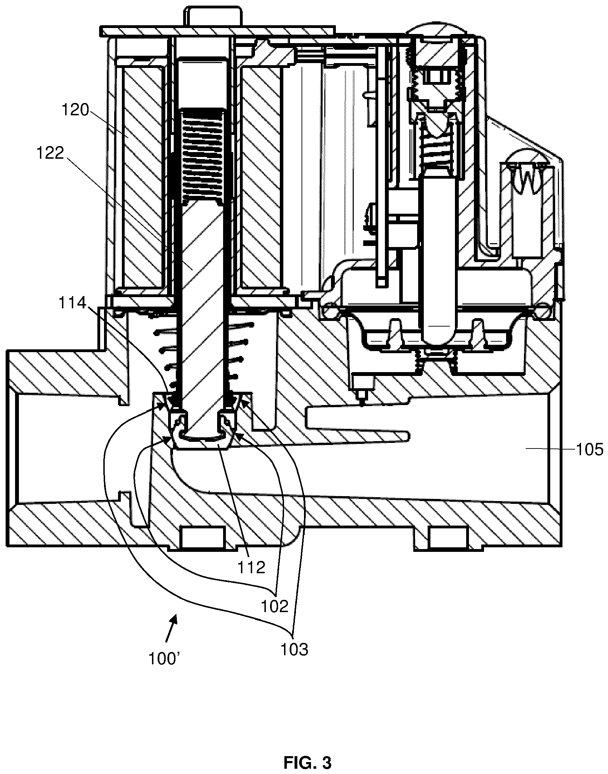

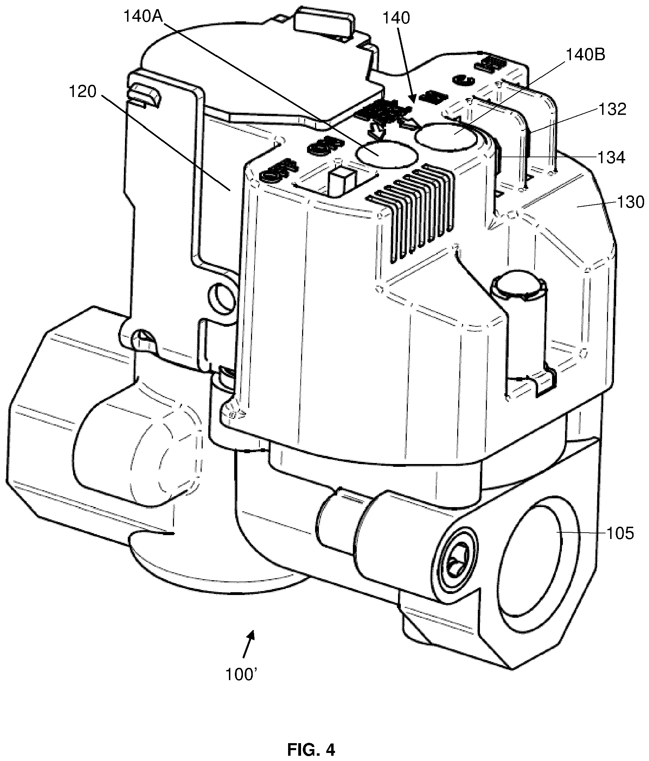

Referring now to FIGS. 3 and 4, there is shown another second exemplary embodiment of a gas valve unit 100' embodying one or more aspects of the present disclosure. The gas valve unit 100' may be used for controllably adjusting gas flow rates within a heating unit. As shown, the gas valve unit 100' includes a movable valve member 122 for controllably adjusting the gas flow rate. In response to a magnetic field generated by a solenoid coil 120, the valve member 122 moves relative to the valve seat 102 to vary the gas flow rate to the valve outlet 105. The valve member 122 is configured to move a controlled amount (to vary the gas flow rate) based on a magnetic field that is established by an input voltage applied to the solenoid coil 120.

The gas valve unit 100' shown in FIGS. 3 and 4 includes a first valve seat 102, a second valve seat 103 substantially co-aligned with the first valve seat 102, and an outlet 105. The gas valve unit 100' includes a first valve element 112 that is spaced from the first valve seat 102 when the first valve element 112 is in an open position. But when in its closed position, the first valve element 112 is seated against the first valve seat 102. The gas valve unit 100' includes a second valve element 114 that is substantially co-aligned with the first valve element 112 and moveable relative to the second valve seat 103. The second valve element 114 is spaced from the second valve seat 103 when the second valve element 114 is in an open position. But when in its closed position, the second valve element 114 is seated against the second valve seat 103.

The gas valve unit 100' further includes a valve member 122 that operatively moves the first valve element 112 and second valve element 114 in response to a magnetic field generated by the solenoid coil 120. The valve member 122 is configured to move the first and second valve elements 112, 114 relative to at least the second valve seat 103 to vary an opening area therebetween. The valve member 122 is configured to move a first distance to pull the first valve element 112 away from a closed position against the first valve seat 102 towards an open position, and to move beyond the first distance to pull the second valve element 114 away from a closed position against the second valve seat 103 and towards an open position. The valve member 122 is configured to move a controlled amount based on the magnetic field generated by the solenoid coil 120, to vary the opening area to provide a desired high-capacity gas flow rate through the valve unit 100'. One example of such a valve design is disclosed in U.S. Provisional Patent Application Serial Number 61/444,956 filed on February 21, 2011.

It should be noted that in various exemplary embodiments of a gas valve unit, establishing a desired high-capacity gas flow rate or low-capacity gas flow rate is equivalent to establishing a corresponding outlet pressure at the outlet 105 of the gas valve unit 100. Specifically, to achieve a desired high-capacity or low-capacity gas flow rate at a downstream location of a burner 58 (as shown in FIG. 2), the gas valve unit 100 in FIG. 1 has a valve member 122 that moves relative to the valve seat 102 to establish an outlet pressure at the outlet 105 that yields a corresponding gas flow rate downstream at the burner 58. Table 1 shown below illustrates various exemplary outlet pressure levels that are approximately equivalent to the listed gas flow rates. The gas flow rates are expressed as a percent of full capacity gas flow for the gas valve unit 100.

**TABLE 1**

| Pressure (inches water column) | Capacity (% full capacity flow for Natural Gas) |
|---|---|
| 5.00 | 100 percent |
| 3.61 | 85 percent |
| 1.25 | 50 percent |
| 0.45 | 30 percent |
| 0.20 | 20 percent |

Accordingly, various exemplary embodiments of a gas valve unit (*e.g*., valve unit 100 shown in FIG. 1, valve unit 100' shown in FIGS. 3 and 4, etc.) are configured to control an input to a coil 120 for generating a magnetic field that causes a valve member 122 to move and establish an outlet pressure at the outlet 105 that corresponds to and/or provides the desired gas flow rate. In the above described exemplary embodiments, the coil 120 may be a component of a solenoid or a stepper-motor that causes the valve member 122 to be moved in response to an input signal to a coil 120. To control the input signal, various exemplary embodiments of a gas valve unit 100 further include a valve controller 130 for controlling the input to the coil 120 for controlling the gas flow rate of the gas valve unit 100 as explained below.

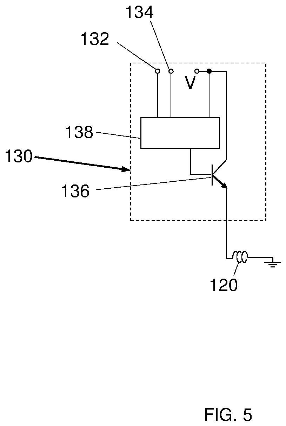

FIG. 5 illustrates an exemplary valve controller 130 that may be used in a gas valve unit, such as gas valve unit 100 (FIG. 1) or 100' (FIGS. 3 and 4). The valve controller 130 shown in FIG. 5 is configured to receive an activation signal (via 132, 134) from a furnace controller for requesting operation of the gas valve unit 100. The valve controller 130 is configured to identify the activation signal as a request to establish a low capacity gas flow rate (*e.g*., low stage operation), a high capacity gas flow rate (*e.g*., high stage), or a select gas flow rate based on a reference value (*e.g*., a pulse width modulation value or current value corresponding to a select capacity level).

Where an activation signal received by the gas valve unit 100 in FIG. 1 is a request to establish a low capacity gas flow rate (*e.g*., low stage) or a high capacity gas flow rate (*e.g*., high stage), the valve controller 130 determines an input signal to the coil 120 that will establish the requested low or high capacity gas flow rate. Where the activation signal received by the gas valve unit 100 is a milliamp current signal that is indicative of a desired operating capacity level, a current to a voltage converter circuit may convert the milliamp signal provided by a system controller 20 (FIG. 2) to a reference signal (*e.g*., 0 to 5 volt signal) that is used to determine an input signal to the coil 120. Likewise, for a pulse-width-modulated signal, the duty cycle (i.e. time that the signal is 'high' versus 'low') may be converted to a 0 to 5 volt reference signal.

Where the coil 120 is part of a stepper motor as in FIG. 1, the valve controller 130 is configured to determine an input to the coil 120 associated with a particular motor step value that corresponds to a low or high-capacity gas flow rate, where the coil 120 generates a magnetic field that causes the stepper motor to move the particular number of steps to bias the servo-regulator diaphragm 110 and move the valve member 122 for establishing the requested low or high-capacity gas flow rate. The valve controller 130 may further be configured to determine a particular motor step value that corresponds to the reference value that is indicative of a select capacity level or gas flow rate. The motor step value is used to determine an input to the coil 120 corresponding to the number of steps the motor must turn or move to bias the servo-regulator diaphragm 110 and move the valve member 122 to establish a gas flow rate (or pressure at outlet 105) corresponding to the reference value and/or desired capacity level.

Where the coil 120 is part of a solenoid as in FIG. 4, the valve controller 130 is configured to determine a particular input voltage signal (or magnitude) that corresponds to a low-capacity or high-capacity gas flow rate, and to apply the input voltage signal to the coil 120 to move the valve member 122 for establishing the requested low or high-capacity gas flow rate. The valve controller 130 may further be configured to determine a particular input voltage signal that will establish a particular gas flow rate that corresponds to the reference value or requested operating capacity level. The valve controller 130 determines an input voltage signal to the coil 120 that will control the extent of movement of the valve member 122 to establish the desired gas flow rate (or pressure at outlet 105) corresponding to the reference value or desired capacity level.

Accordingly, the valve controller 130 is configured to determine an input signal to the coil 120 (that is associated with a particular motor step value, or a particular voltage level), which will cause the valve member 122 to move relative to the valve seat 102 to establish the requested low capacity gas flow rate or high-capacity gas flow rate through the gas valve unit 100', or the particular gas flow rate corresponding to a reference value indicative of an operating capacity level. The gas valve unit 100' further includes a setting adjustment device 140 that enables a user to provide a setting adjustment input for calibrating at least one desired gas flow rate. The setting adjustment device 140 enables a user to make an entry for providing first and second setting adjustment inputs, for calibrating at least a low-capacity gas flow rate and a high-capacity gas flow rate, respectively.

The setting adjustment device 140 may comprise a dip switch. The dip switch may be a linear six position dip switch, or a rotary dip switch as shown at 140 in FIG. 1. The rotary dip switch may provide a setting adjustment input for adding a number of steps when turned in one direction, or for decrementing a number of steps when turned in the opposite direction. The dip switch position or setting may be used to increment or decrement the determined number of stepper motor steps required to establish a given gas flow rate, which is used to adjust the input signal to the coil 120 that will yield the total adjusted number of motor steps to be made.

In the gas valve unit 100 shown in FIG. 1, the setting adjustment device comprises a rotary dip switch that provides at least a first setting adjustment input, from which a control variable may be obtained that is utilized to adjust the input signal to coil 120 to adjust at least one gas flow rate. Where the coil 120 is part of a stepper motor, the first setting adjustment input may be used to determine a control variable such as a "step" value for incrementing or decrementing the determined number of stepper motor steps for biasing the servo-regulator diaphragm 110 and displacing valve member 122 to establish a low-capacity gas flow rate. Likewise, the second setting adjustment input may be used to determine a control variable or "step" value for incrementing or decrementing the determined number of motor steps to bias the servo-regulator diaphragm 110 and displace valve member 122 to establish the high-capacity gas flow rate. Thus, if the gas valve unit 100 in FIG 1 is set at the time of manufacture to provide an input signal to coil 120 for moving the stepper motor a determined number of steps to bias the servo-regulator diaphragm 110 to establish a high-capacity gas flow rate, the setting adjustment device provides a setting adjustment input from which a control variable (e.g., value for incrementing/decrementing the number of motor steps) is utilized to adjust the input signal to the coil 120, to thereby enable field adjustment of the high-capacity gas flow rate.

Where the coil 120 is part of a solenoid as in the gas valve unit 100' in FIG. 4, the first setting adjustment input may be used to determine a control variable such as a "voltage" offset for incrementing or decrementing a given input voltage signal to the coil 120 for moving the valve member 122 and establishing a low-capacity gas flow rate. Likewise, the second setting adjustment input may be used to determine a control variable or voltage offset for incrementing or decrementing the input voltage signal to the coil 120, to adjust the movement of valve member 122 in establishing a high-capacity gas flow rate. Thus, if the gas valve unit 100' in FIG. 4 is set at the time of manufacture to provide a given input signal to coil 120 to move the valve member 122 to establish a high-capacity gas flow rate, the setting adjustment device 140 provides an adjustment input from which a control variable (e.g., voltage offset for incrementing or decrementing the input voltage) is utilized to adjust the input signal to the coil 120, to thereby enable field adjustment of the high-capacity gas flow rate.

In the second gas valve unit 100' shown in FIG. 4, it should be noted that the setting adjustment device 140 may comprise a pair of momentary push buttons 140A, 140B (instead of a dip switch). The pair of momentary push buttons 140A, 140B provide for user input of at least a first setting adjustment input for adjusting an input signal to a coil 120, such that at least one gas flow rate setting of the gas valve unit 100' is field adjustable by the setting adjustment device. Alternatively, the pair of momentary push buttons may comprise a single momentary push button that is depressed for a minimum time for input of adjustment in one direction or depressed for a second minimum time for input of adjustment in the opposite direction. Thus, a single momentary push button may be substituted as an equivalent to a pair of push buttons. Accordingly, the setting adjustment device 140 may comprise a dip switch, a rotary dip switch, one or more momentary push buttons, or any other equivalent components that are suitable for enabling user entry of an adjustment input.

Accordingly, in other aspects of the present disclosure, an exemplary embodiment of a field adjustable gas valve unit 100' includes a setting adjustment device 140 for providing a setting adjustment input for calibrating at least one desired gas flow rate, where the setting adjustment device 140 comprises a pair of momentary push buttons 140A, 140B. The gas valve unit 100' includes a valve controller 130 in communication with the setting adjustment device 140 and a coil 120, where the valve controller 130 is configured to receive an activation signal and to responsively send an input signal to the coil 120 to move a valve member 122 to establish at least one desired gas flow rate, wherein the valve controller 130 is configured to adjust the input signal to the coil 120 based on the setting adjustment input, to thereby enable field adjustment of the level of the at least one desired gas flow rate.

Referring to FIG. 5, a schematic diagram of the valve controller 130 is provided. The valve controller 130 may comprise a microprocessor 138 that is in communication with the first connection 132 configured to receive a high-stage activation signal, and with the second connection 134 configured to receive a low-stage activation signal (from a two-stage system controller 20). Alternatively, a pulse-width-modulation or other equivalent signal may be received (via 134), which signal indicates a desired operating capacity level. The microprocessor 138 may control a switching device 136 to controllably switch a voltage on and off to provide a pulse-width modulated voltage signal to a stepper motor controller for controlling one or more coils 120 (FIG. 1), to thereby control the gas flow rate of the gas valve unit 100. Alternatively, the microprocessor 138 may control the switching device 136 to provide pulse width modulation of a voltage for controlling an input voltage signal (*e.g*., voltage level) that can be applied to a coil 120.

In various exemplary embodiments of a gas valve unit 100, the valve controller 130 may further employ a lookup table having a set of motor step values, which are used to determine the appropriate number of steps the stepper motor must move. For example, in the gas valve unit 100 in FIG. 1, the look-up table may include a set of motor step values that correspond to a number of reference values (between 0 and 5 volts), wherein the valve controller 130 selects from the look-up table a motor step value (or an input signal to a coil 120 that will yield the number of motor steps), which corresponds to the reference value provided in the activation signal from a system controller 20. The valve controller 130 is in communication with the setting adjustment device 140, and is configured to adjust the input signal to a coil 120 (*e.g.,* an input signal to at least one stepper motor coil 120 that will yield the required number of stepper motor steps), based on the setting adjustment input. This feature accordingly enables field adjustment of a factory-set gas flow rate setting.

In another exemplary embodiment, a gas valve includes an electronically operated gas regulating servo, in which the regulated output is trimmed (or adjusted) using a rotary dip switch. In this exemplary, the valve is set to its low fire outlet (*e.g*., perhaps a first stage), and the rotary dip switch is used to adjust the outlet pressure if it is out of range. When adjusted, the valve is then commanded to its high fire rate (*e.g*., perhaps a second stage), and the rotary dip switch is used to adjust the output if it is out of range. The signal to go to low (or lowest) setting and then high (or highest) setting is sent by an input from a furnace control (*e.g*., IFC, etc.) perhaps using a calibration button on an IFC panel. Where the gas valve has more than two stages, an onboard gas valve control may be provided that interpolates (*e.g*., via linear interpolation to make affects fade evenly from low end to high end, etc.) the intermediate values for the gas valve output, once the lowest and highest outputs have been calibrated. The adjustment may be in steps if the valve includes a stepper motor. Or, for example, adjustment may be in voltage related to outlet pressure. By way of example, the stepper control may look at only changes in the dip switch and not a relative position, where these changes may apply only to the range around where the valve is at currently. For example, if the valve is at the low end, the changes to the dip switch apply to the low end and the limits on the low end are separate from the high end. These changes can have lesser affects as the valve is moved to the high end. If the valve is at the high end, the changes to the dip switch apply to the high end and the limits on the low end are separate from the high end. These changes can have lesser affects as the valve is moved to the low end. Linear interpolation may be used to make the effects fade evenly from low end to high end. Advantageously, this exemplary embodiment may provide good resolution and a good range of adjustment that is also easier to understand.

In another exemplary embodiment of a gas vale, two momentary push buttons (*e.g*., an up button for increasing outlet pressure and a down button for decreasing outlet pressure, etc.) are used to perform essentially the same function as the single rotary encoder mentioned above. In this exemplary embodiment, the valve may be commanded to its lowest and highest positions by an external device or the input may be onboard the valve itself. The push buttons may then be used to adjust or trim the gas valve outlet pressure. In this example embodiment, the valve's low fire setting and high fire setting may be programmed into the valve at the factory such that the valve will operate or run as is. But the valve can later be trimmed or adjusted in the field, for example, for different altitudes, etc. by using the momentary push buttons. This example embodiment may include a processor that knows from other inputs which flow level it is currently at. The processor may be operable for slowly or gradually revising its target operating point (in real time) for that level when it senses either button being pressed. By way of example, when the button is released, the new target may be saved in non-volatile memory for future use until the next time someone readjusts. Other exemplary embodiments may include using repeated short presses of the button to cause small step-changes to the setting and/or saving to non-volatile memory once only after a preset time delay, which may limit writes and improve real-time performance.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms (*e.g*., different materials may be used, etc.) and that neither should be construed to limit the scope of the disclosure. In some example embodiments, well-known processes, well-known device structures, and well-known technologies are not described in detail. In addition, advantages and improvements that may be achieved with one or more exemplary embodiments of the present disclosure are provided for purpose of illustration only and do not limit the scope of the present disclosure, as exemplary embodiments disclosed herein may provide all or none of the above mentioned advantages and improvements and still fall within the scope of the present disclosure.

Specific dimensions, specific materials, and/or specific shapes disclosed herein are example in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may be suitable for the given parameter (*i.e*., the disclosure of a first value and a second value for a given parameter can be interpreted as disclosing that any value between the first and second values could also be employed for the given parameter). Similarly, it is envisioned that disclosure of two or more ranges of values for a parameter (whether such ranges are nested, overlapping or distinct) subsume all possible combination of ranges for the value that might be claimed using endpoints of the disclosed ranges.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The term "about" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates at least variations that may arise from ordinary methods of measuring or using such parameters. For example, the terms "generally", "about", and "substantially" may be used herein to mean within manufacturing tolerances.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements, intended or stated uses, or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A gas valve unit (100) for controlling a gas flow rate to a combustion apparatus, the gas valve unit comprising:
a valve member (122) moveable relative to a valve seat (102), wherein an input signal to a coil (120) controls the extent of movement of the valve member relative to the valve seat to control a gas flow rate through the gas valve unit to the combustion apparatus;
a setting adjustment device (140) that provides a setting adjustment input for calibrating at least one desired gas flow rate manufacturer-set in the gas valve unit; and
a valve controller (130) in communication with the setting adjustment device and the coil, the valve controller being configured to receive an activation signal prompted by a thermostat and to responsively send the input signal to the coil to move the valve member to establish at least one desired gas flow rate corresponding to the activation signal, **characterized in that** the valve controller further is configured to use a first value of the setting adjustment input from the setting adjustment device to calibrate a manufacturer-set high-capacity gas flow rate to obtain a calibrated high-capacity gas flow rate for a gas, and to use a second value of the setting adjustment input from the setting adjustment device to calibrate a manufacture-set low-capacity gas flow rate to obtain a calibrated low-capacity gas flow rate for the gas, where in a single calibration, calibrating one of the high-capacity gas flow rate and the low-capacity gas flow rate is not effective to calibrate the other one of the high-capacity gas flow rate and the low-capacity gas flow rate.

2. The gas valve unit of claim 1 wherein:
the setting adjustment device (140) provides a setting adjustment input from which a control variable may be obtained that is utilized to adjust the input signal to the coil (120); and/or
the setting adjustment device (140) comprises one of a linear dip switch, a rotary dip switch, or momentary push buttons; and/or
the valve controller (130) is configured to control the input signal to the coil (120) to move the valve member (122) to a first position in which a high-capacity gas flow rate is communicated to an outlet, and to control the input signal to the coil to move the valve member to a second position in which a low-capacity gas flow rate is communicated to the outlet.

3. The gas valve unit of claim 2, wherein the valve controller (130) is configured to utilize said control variable that comprises a stepper motor step value, which is used to adjust the input signal to the coil to cause a stepper motor (120) to move the required number of steps to adjust the valve member relative to the valve seat to establish at least one adjusted gas flow rate.

4. The gas valve unit of claim 1, 2, or 3, wherein the gas valve unit further includes:
a main diaphragm chamber (109),
a main diaphragm (104) in the main diaphragm chamber that controllably displaces a valve (106) relative to a valve opening (108) in response to changes in pressure in the main diaphragm chamber, to thereby permit adjustment of the flow of fuel through the valve opening;
a servo-regulator diaphragm (110) configured to regulate fluid flow to the main diaphragm chamber, to control the rate of fuel flow through the valve opening; and
a stepper motor (120) configured to move in a stepwise manner to bias the servo-regulator diaphragm for regulating fluid flow to the diaphragm chamber to move the valve member relative to the valve seat, to thereby control the gas flow rate through the gas valve unit.

5. The gas valve control of claim 4, wherein the valve controller (130) is configured to determine a select motor step value that corresponds to the activation signal, and to move the stepper-motor to the selected motor step value for biasing the servo-regulator diaphragm, to thereby establish a particular gas flow rate that corresponds to the activation signal.

6. The gas valve unit of claim 4, wherein the activation signal is a milliamp signal in the range of from 0 to 180 milliamps, and the valve controller is configured to determine a reference value from the activation signal that the valve controller uses to determine the number of stepper motor steps for establishing the particular gas flow rate corresponding to the activation signal.

7. The gas valve unit of claim 4, further comprising a look-up table associated with the valve controller, which includes a set of motor step values that correspond to a number of reference values, wherein the valve controller is configured to select a motor step value from the look up table that corresponds to the reference value associated with the activation signal.

8. The gas valve unit of claim 7, wherein the set of motor step values correspond to a plurality of positions of the stepper motor (120) for adjusting the gas flow rate, said plurality of positions ranging from a full capacity flow position to a minimum capacity flow that is 15 percent of the full capacity flow.

9. The gas valve unit of claim 1, wherein the coil (120) of the gas valve unit is a solenoid coil.

10. The gas valve unit of claim 1, wherein:
the gas valve unit (100') includes a solenoid coil (120);
the valve member (122) moves relative to the valve seat (102, 103) in response to a magnetic field generated by the solenoid coil;
an input signal to the solenoid coil controls the extent of movement of the valve member relative to the valve seat to control a gas flow rate through the gas valve unit; and
the valve controller is in communication with the setting adjustment device (140) and the solenoid coil, the valve controller being configured to receive an activation signal and to responsively send an input signal to the solenoid coil to move the valve member to establish at least one desired gas flow rate corresponding to the control signal, wherein the valve controller is configured to adjust the input signal to the solenoid coil based on the setting adjustment input, to thereby enable field adjustment of the level of the at least one desired gas flow rate.

11. The gas valve unit of claim 10, wherein:
the setting adjustment device (140) comprises one of a linear dip switch, a rotary dip switch, or momentary push buttons; and/or
the valve controller is configured to control the input signal to the solenoid coil to move the valve member to a first position in which a high-capacity gas flow rate is communicated to an outlet (105), and to control the input signal to the solenoid coil to move the valve member to a second position in which a low-capacity gas flow rate is communicated to the outlet.

12. The gas valve unit of claim 9, 10, or 11, wherein:
the setting adjustment device provides a setting adjustment input from which a control variable may be obtained that is utilized to adjust the input signal to the solenoid coil; and
the valve controller is configured to utilize said control variable that comprises a voltage offset value, which is used to adjust an input voltage signal to the solenoid coil to control the extent of movement of the valve member relative to the valve seat to establish at least one adjusted gas flow rate.

13. The gas valve unit of claim 9, 10, 11, or 12, wherein the valve member is moved by the solenoid coil, without any mechanical linkage to a diaphragm, to directly vary an opening area relative to the valve seat for controlling a gas flow rate.

14. The gas valve control of claim 9, 10, 11, 12, or 13, wherein:
the valve controller is configured to determine a voltage input signal to the solenoid that corresponds to the activation signal, and to adjust the voltage input signal based on the setting adjustment input, to thereby establish an adjusted gas flow rate that corresponds to the activation signal; and/or
the activation signal is a milliamp signal in the range of from 0 to 180 milliamps, and the valve controller is configured to determine a reference value from the activation signal that the valve controller uses to determine an input voltage signal for establishing a particular gas flow rate corresponding to the activation signal.

15. The gas valve unit of claim 9, 10, 11, 12, 13, or 14, further comprising a look-up table associated with the valve controller, which includes a set of input voltage values that correspond to a number of reference values, wherein the valve controller is configured select an input voltage value from the look up table that corresponds to the reference value associated with the activation signal, and wherein the set of input voltage values correspond to a plurality of positions of the valve member for adjusting the gas flow rate, said plurality of positions ranging from a full capacity flow position to a minimum capacity flow.

## Patentansprüche

1. Gasventileinheit (100) zum Steuern eines Gasdurchsatzes zu einer Verbrennungsvorrichtung, wobei die Gasventileinheit umfasst:
ein Ventilelement (122), das relativ zu einem Ventilsitz (102) bewegbar ist, wobei ein Eingangssignal für eine Spule (120) das Ausmaß der Bewegung des Ventilelements relativ zu einem Ventilsitz steuert, um einen Gasdurchsatz durch die Gasventileinheit zu der Verbrennungsvorrichtung zu steuern;
eine Einstellungsanpassungsvorrichtung (140), welche einen Einstellungsanpassungseingang zum Kalibrieren wenigstens eines gewünschten Gasdurchsatzes, der in der Gasventileinheit herstellerseitig eingestellt wurde, bereitstellt; und
eine Ventilsteuerung (130), die mit der Einstellungsanpassungsvorrichtung und der Spule in Verbindung steht, wobei die Ventilsteuerung dafür ausgelegt ist, ein Aktivierungssignal zu empfangen, das von einem Thermostat angefordert wurde, und in Reaktion darauf das Eingangssignal an die Spule zu senden, um das Ventilelement zu bewegen, um wenigstens einen gewünschten Gasdurchsatz herzustellen, der dem Aktivierungssignal entspricht, **dadurch gekennzeichnet, dass** die Ventilsteuerung ferner dafür ausgelegt ist, einen ersten Wert des Einstellungsanpassungseingangs von der Einstellungsanpassungsvorrichtung zu verwenden, um einen herstellerseitig eingestellten Gasdurchsatz hoher Kapazität zu kalibrieren, um einen kalibrierten Gasdurchsatz hoher Kapazität für ein Gas zu erhalten, und einen zweiten Wert des Einstellungsanpassungseingangs von der Einstellungsanpassungsvorrichtung zu verwenden, um einen herstellerseitig eingestellten Gasdurchsatz niedriger Kapazität zu kalibrieren, um einen kalibrierten Gasdurchsatz niedriger Kapazität für das Gas zu erhalten, wobei bei einer einzigen Kalibrierung das Kalibrieren eines von dem Gasdurchsatz hoher Kapazität und dem Gasdurchsatz niedriger Kapazität nicht ein Kalibrieren des anderen von dem Gasdurchsatz hoher Kapazität und dem Gasdurchsatz niedriger Kapazität bewirkt.

2. Gasventileinheit nach Anspruch 1, wobei:
die Einstellungsanpassungsvorrichtung (140) einen Einstellungsanpassungseingang bereitstellt, aus welchem eine Steuervariable erhalten werden kann, welche verwendet wird, um das Eingangssignal für die Spule (120) anzupassen; und/oder
die Einstellungsanpassungsvorrichtung (140) entweder einen linearen DIP-Schalter oder einen DIP-Drehschalter oder Druckknopftaster umfasst; und/oder
die Ventilsteuerung (130) dafür ausgelegt ist, das Eingangssignal für die Spule (120) so zu steuern, dass das Ventilelement (122) in eine erste Position bewegt wird, in welcher ein Gasdurchsatz hoher Kapazität zu einem Auslass kommuniziert wird, und das Eingangssignal für die Spule so zu steuern, dass das Ventilelement in eine zweite Position bewegt wird, in welcher ein Gasdurchsatz niedriger Kapazität zu dem Auslass kommuniziert wird.

3. Gasventileinheit nach Anspruch 2, wobei die Ventilsteuerung (130) dafür ausgelegt ist, die Steuervariable zu verwenden, welche einen Schrittmotorwert umfasst, welcher verwendet wird, um das Eingangssignal für die Spule so anzupassen, dass bewirkt wird, dass sich ein Schrittmotor (120) die erforderliche Anzahl von Schritten bewegt, um das Ventilelement relativ zu dem Ventilsitz so zu verstellen, dass wenigstens ein angepasster Gasdurchsatz hergestellt wird.

4. Gasventileinheit nach Anspruch 1, 2 oder 3. wobei die Gasventileinheit ferner aufweist:
eine Hauptmembrankammer (109);
eine Hauptmembran (104) in der Hauptmembrankammer, welche steuerbar ein Ventil (106) relativ zu einer Ventilöffnung (108) in Reaktion auf Änderungen des Drucks in der Hauptmembrankammer verlagert, um dadurch eine Verstellung des Durchflusses von Brennstoff durch die Ventilöffnung zu ermöglichen;
eine Servoreglermembran (110), die dafür ausgelegt ist, den Fluiddurchfluss zu der Hauptmembrankammer zu regeln, um den Durchsatz von Brennstoff durch die Ventilöffnung zu steuern; und
einen Schrittmotor (120), der dafür ausgelegt ist, eine stufenweise Bewegung auszuführen, um die Servoreglermembran zum Regeln des Fluiddurchflusses zu der Membrankammer vorzuspannen, um das Ventilelement relativ zu dem Ventilsitz zu bewegen, um dadurch den Gasdurchsatz durch die Gasventileinheit zu steuern.

5. Gasventileinheit nach Anspruch 4, wobei die Ventilsteuerung (130) dafür ausgelegt ist, einen ausgewählten Motorschrittwert zu bestimmen, welcher dem Aktivierungssignal entspricht, und den Schrittmotor zu dem ausgewählten Motorschrittwert zu bewegen, zum Vorspannen der Servoreglermembran, um dadurch einen bestimmten Gasdurchsatz herzustellen, welcher dem Aktivierungssignal entspricht.

6. Gasventileinheit nach Anspruch 4, wobei das Aktivierungssignal ein Milliampere-Signal im Bereich von 0 bis 180 Milliampere ist und die Ventilsteuerung dafür ausgelegt ist, aus dem Aktivierungssignal einen Referenzwert zu bestimmen, welchen die Ventilsteuerung verwendet, um die Anzahl von Schrittmotorschritten zum Herstellen des bestimmten Gasdurchsatzes, der dem Aktivierungssignal entspricht, zu bestimmen.

7. Gasventileinheit nach Anspruch 4, welche ferner eine der Ventilsteuerung zugeordnete Nachschlagtabelle umfasst, welche eine Menge von Motorschrittwerten enthält, die einer Anzahl von Referenzwerten entsprechen, wobei die Ventilsteuerung dafür ausgelegt ist, einen Motorschrittwert aus der Nachschlagtabelle auszuwählen, welcher dem Referenzwert entspricht, der dem Aktivierungssignal zugeordnet ist.

8. Gasventileinheit nach Anspruch 7, wobei die Menge von Motorschrittwerten einer Vielzahl von Positionen des Schrittmotors (120) zum Verstellen des Gasdurchsatzes entspricht, wobei die Vielzahl von Positionen von einer Position des Durchflusses mit voller Kapazität bis zu einem Durchfluss mit minimaler Kapazität, welche 15 Prozent des Durchflusses mit voller Kapazität beträgt, reicht.

9. Gasventileinheit nach Anspruch 1, wobei die Spule (120) der Gasventileinheit eine Magnetspule ist.

10. Gasventileinheit nach Anspruch 1, wobei:
die Gasventileinheit (100') eine Magnetspule (120) aufweist;
das Ventilelement (122) sich relativ zu dem Ventilsitz (102, 103) in Reaktion auf ein Magnetfeld bewegt, das von der Magnetspule erzeugt wird;
ein Eingangssignal für die Magnetspule das Ausmaß der Bewegung des Ventilelements relativ zu dem Ventilsitz steuert, um einen Gasdurchsatz durch die Gasventileinheit zu steuern; und
die Ventilsteuerung mit der Einstellungsanpassungsvorrichtung (140) und der Magnetspule in Verbindung steht, wobei die Ventilsteuerung dafür ausgelegt ist, ein Aktivierungssignal zu empfangen und in Reaktion darauf ein Eingangssignal an die Magnetspule zu senden, um das Ventilelement zu bewegen, um wenigstens einen gewünschten Gasdurchsatz herzustellen, der dem Steuersignal entspricht, wobei die Ventilsteuerung dafür ausgelegt ist, das Eingangssignal für die Magnetspule basierend auf dem Einstellungsanpassungseingang zu verstellen, um dadurch eine Verstellung der Höhe des wenigstens einen gewünschten Gasdurchsatzes am Einsatzort zu ermöglichen.

11. Gasventileinheit nach Anspruch 10, wobei:
die Einstellungsanpassungsvorrichtung (140) entweder einen linearen DIP-Schalter oder einen DIP-Drehschalter oder Druckknopftaster umfasst; und/oder
die Ventilsteuerung dafür ausgelegt ist, das Eingangssignal für die Magnetspule so zu steuern, dass das Ventilelement in eine erste Position bewegt wird, in welcher ein Gasdurchsatz hoher Kapazität zu einem Auslass (105) kommuniziert wird, und das Eingangssignal für die Magnetspule so zu steuern, dass das Ventilelement in eine zweite Position bewegt wird, in welcher ein Gasdurchsatz niedriger Kapazität zu dem Auslass kommuniziert wird.

12. Gasventileinheit nach Anspruch 9, 10 oder 11, wobei:
die Einstellungsanpassungsvorrichtung einen Einstellungsanpassungseingang bereitstellt, aus welchem eine Steuervariable erhalten werden kann, welche verwendet wird, um das Eingangssignal für die Magnetspule anzupassen; und/oder
die Ventilsteuerung dafür ausgelegt ist, die Steuervariable zu verwenden, welche einen Spannungsversatzwert umfasst, welcher verwendet wird, um ein Eingangsspannungssignal für die Magnetspule anzupassen, um das Ausmaß der Bewegung des Ventilelements relativ zu dem Ventilsitz zu steuern, um wenigstens einen angepassten Gasdurchsatz herzustellen.

13. Gasventileinheit nach Anspruch 9, 10, 11 oder 12, wobei das Ventilelement von der Magnetspule ohne irgendeine mechanische Kopplung mit einer Membran bewegt wird, um zum Steuern eines Gasdurchsatzes eine Öffnungsfläche bezüglich eines Ventilsitzes direkt zu ändern.

14. Gasventileinheit nach Anspruch 9, 10, 11, 12 oder 13, wobei:
die Ventilsteuerung dafür ausgelegt ist, ein Spannungseingangssignal für die Magnetspule zu bestimmen, welches dem Aktivierungssignal entspricht, und das Spannungseingangssignal basierend auf dem Einstellungsanpassungseingang anzupassen, um dadurch einen angepassten Gasdurchsatz herzustellen, welcher dem Aktivierungssignal entspricht; und/oder
das Aktivierungssignal ein Milliampere-Signal im Bereich von 0 bis 180 Milliampere ist und die Ventilsteuerung dafür ausgelegt ist, aus dem Aktivierungssignal einen Referenzwert zu bestimmen, welchen die Ventilsteuerung verwendet, um ein Eingangsspannungssignal zum Herstellen eines bestimmten Gasdurchsatzes, der dem Aktivierungssignal entspricht, zu bestimmen.

15. Gasventileinheit nach Anspruch 9, 10, 11, 12, 13 oder 14, welche ferner eine der Ventilsteuerung zugeordnete Nachschlagtabelle umfasst, welche eine Menge von Eingangsspannungswerten enthält, die einer Anzahl von Referenzwerten entsprechen, wobei die Ventilsteuerung dafür ausgelegt ist, einen Eingangsspannungswert aus der Nachschlagtabelle auszuwählen, welcher dem Referenzwert entspricht, der dem Aktivierungssignal zugeordnet ist, und wobei die Menge von Eingangsspannungswerten einer Vielzahl von Positionen des Ventilelements zum Verstellen des Gasdurchsatzes entspricht, wobei die Vielzahl von Positionen von einer Position des Durchflusses mit voller Kapazität bis zu einem Durchfluss mit minimaler Kapazität reicht.

## Revendications

1. Unité de soupape de gaz (100) pour réguler un débit de gaz vers un dispositif de combustion, l'unité de soupape de gaz comprenant :
un élément de soupape (122) déplaçable par rapport à un siège de soupape (102), dans lequel un signal d'entrée vers une bobine (120) régule la proportion de mouvement de l'élément de soupape par rapport au siège de soupape afin de réguler un débit de gaz à travers l'unité de soupape de gaz vers le dispositif de combustion ;
un dispositif d'ajustement de réglage (140) qui fournit une entrée d'ajustement de réglage pour calibrer au moins un réglage par le fabricant du débit de gaz désiré dans l'unité de soupape de gaz ; et
un contrôleur de soupape (130) en communication avec le dispositif d'ajustement de réglage et la bobine, le contrôleur de soupape étant configuré pour recevoir un signal d'activation émis par un thermostat et envoyer en réponse le signal d'entrée à la bobine afin de déplacer l'élément de soupape afin d'établir au moins un débit de gaz désiré correspondant au signal d'activation, **caractérisé en ce que** le contrôleur de soupape est en outre configuré pour utiliser une première valeur de l'entrée d'ajustement de réglage provenant du dispositif d'ajustement de réglage pour calibrer un débit de gaz à haute capacité réglé par le fabricant afin d'obtenir un débit de gaz à haute capacité calibré pour un gaz et utiliser une seconde valeur de l'entrée de réglage provenant du dispositif d'ajustement de réglage pour calibrer un débit de gaz à basse capacité réglé par le fabricant afin d'obtenir un débit de gaz à basse capacité calibré pour le gaz, dans laquelle lors d'un calibrage unique, le calibrage d'un du débit de gaz à haute capacité et du débit de gaz à basse capacité n'est pas effectif pour le calibrage de l'autre du débit de gaz à haute capacité et du débit de gaz à basse capacité.

2. Unité de soupape de gaz selon la revendication 1, dans laquelle :
le dispositif d'ajustement de réglage (140) fournit une entrée d'ajustement de réglage d'après laquelle une variable de commande peut être obtenue qui est utilisée pour ajuster le signal d'entrée vers la bobine (120) ; et/ou le dispositif d'ajustement de réglage (140) comprend un d'un commutateur dip linéaire, un commutateur dip rotatif ou des boutons poussoirs instantanés ; et/ou
le contrôleur de soupape (130) est configuré afin de contrôler le signal d'entrée vers la bobine (120) pour déplacer l'élément de soupape (122) dans une première position dans laquelle un débit de gaz à haute capacité est communiqué vers la sortie et contrôler le signal d'entrée vers la bobine pour déplacer l'élément de soupape dans une seconde position dans laquelle un débit de gaz à basse capacité est communiqué vers la sortie.

3. Unité de soupape de gaz selon la revendication 2, dans laquelle le contrôleur de soupape (130) est configuré pour utiliser ladite variable de commande qui comprend une valeur d'étape de moteur pas à pas qui est utilisée pour ajuster le signal d'entrée vers la bobine afin d'amener un moteur pas à pas (120) à passer le nombre nécessaire d'étapes pour ajuster l'élément de soupape par rapport au siège de soupape afin d'établir au moins un débit de gaz ajusté.

4. Unité de soupape de gaz selon la revendication 1,2 ou 3, dans laquelle l'unité de gaz de soupape inclut en outre :
une chambre de diaphragme principal (109),
un diaphragme principal (104) dans la chambre de diaphragme principal qui déplace une soupape (106) de manière contrôlée par rapport à une ouverture de soupape(108) en réponse aux variations de pression dans la chambre de diaphragme principal pour permettre ainsi l'ajustement de l'écoulement de carburant à travers l'ouverture de soupape ;
un diaphragme de servo-régulateur (110) configuré pour réguler l'écoulement de fluide vers la chambre de diaphragme principal pour réguler le taux d'écoulement de carburant à travers l'ouverture de soupape ; et
un moteur pas à pas (120) configuré pour se déplacer par étapes pour solliciter le diaphragme de servo-régulateur afin de réguler l'écoulement de fluide vers la chambre de diaphragme pour déplacer l'élément de soupape par rapport au siège de soupape afin de réguler ainsi le débit de gaz à travers l'unité de soupape de gaz.

5. Unité de soupape de gaz selon la revendication 4, dans laquelle le contrôleur de soupape (130) est configuré pour déterminer une valeur d'étape de moteur qui correspond au signal d'activation et déplacer le moteur pas à pas vers la valeur d'étape de moteur sélectionnée pour solliciter le diaphragme de servo-régulateur, afin d'établir ainsi un débit de gaz particulier qui correspond au signal d'activation.

6. Unité de soupape de gaz selon la revendication 4, dans laquelle le signal d'activation est un signal de milliampères dans la plage de 0 à 180 milliampères et le contrôleur de soupape est configuré pour déterminer une valeur de référence d'après le signal d'activation que le contrôleur de soupape utilise pour déterminer le nombre d'étapes de moteur pas à pas pour établir le débit de gaz particulier correspondant au signal d'activation.

7. Unité de soupape de gaz selon la revendication 4, comprenant en outre une table de recherche associée au contrôleur de soupape, qui inclut un ensemble de valeurs d'étape de moteur qui correspond à un nombre de valeurs de référence, dans lequel le contrôleur de soupape est configuré pour sélectionner une valeur d'étape de moteur dans la table de recherche qui correspond à la valeur de référence associée au signal d'activation.

8. Unité de soupape de gaz selon la revendication 7, dans laquelle l'ensemble de valeurs d'étape de moteur correspond à une pluralité de positions du moteur pas à pas (120) pour ajuster le débit de gaz, ladite pluralité de positions allant d'une position d'écoulement à capacité complète à un écoulement à capacité minimale qui est 15 % de l'écoulement à capacité complète.

9. Unité de soupape de gaz selon la revendication 1, dans laquelle la bobine (120) de l'unité de gaz de soupape est une bobine solénoïde.

10. Unité de soupape de gaz selon la revendication 1, dans laquelle :
l'unité de soupape de gaz (100') inclut une bobine solénoïde (120) ;
l'élément de soupape (122) se déplace par rapport au siège de soupape (102,103) en réponse à un champ magnétique généré par la bobine solénoïde ;
un signal d'entrée vers la bobine solénoïde régule la proportion de mouvement de l'élément de soupape par rapport au siège de soupape afin de réguler un débit de gaz à travers l'unité de soupape de gaz ; et
le contrôleur de soupape est en communication avec le dispositif d'ajustement de réglage (140) et la bobine solénoïde, le contrôleur de soupape étant configuré pour recevoir un signal d'activation et envoyer en réponse un signal d'entrée à la bobine solénoïde afin de déplacer l'élément de soupape pour établir au moins un débit de gaz désiré correspondant au signal de commande, dans lequel le contrôleur de soupape est configuré pour ajuster le signal d'entrée vers la bobine solénoïde sur la base de l'entrée d'ajustement de réglage, pour permettre ainsi le réglage sur le terrain du niveau d'au moins un débit de gaz désiré.

11. Unité de soupape de gaz selon la revendication 10, dans laquelle :
le dispositif d'ajustement de réglage (140) comprend un d'un commutateur dip linéaire, un commutateur dip rotatif ou des boutons poussoirs instantanés ; et/ou
le contrôleur de soupape est configuré afin de contrôler le signal d'entrée vers la bobine pour déplacer l'élément de soupape dans une première position dans laquelle un débit de gaz à haute capacité est communiqué vers la sortie et contrôler le signal d'entrée vers la bobine pour déplacer l'élément de soupape dans une seconde position dans laquelle un débit de gaz à basse capacité est communiqué vers la sortie.

12. Unité de soupape de gaz selon la revendication 9,10 ou 11, dans laquelle :
le dispositif d'ajustement de réglage fournit une entrée d'ajustement de réglage d'après laquelle une variable de commande peut être obtenue qui est utilisée pour ajuster le signal d'entrée vers la bobine solénoïde ; et
le contrôleur de soupape est configuré pour utiliser ladite variable de commande qui comprend une valeur de décalage de tension, qui est utilisée pour ajuster un signal de tension d'entrée vers la bobine solénoïde afin de de réguler la proportion de de l'élément de soupape par rapport au siège de soupape afin d'établir au moins un débit de gaz ajusté.

13. Unité de soupape de gaz selon la revendication 9,10,11 ou 12, dans laquelle l'élément de soupape est déplacé par la bobine solénoïde, sans aucune tringlerie mécanique vers un diaphragme, afin de varier directement une zone d'ouverture par rapport au siège de soupape pour réguler un débit de gaz.

14. Unité de soupape de gaz selon la revendication 9, 10, 11, 12 ou 13, dans laquelle :
le contrôleur de soupape est configuré pour déterminer un signal d'entrée de tension vers la solénoïde qui correspond au signal d'activation et ajuster le signal d'entrée de tension sur la base de l'entrée d'ajustement de réglage afin d'établir ainsi un débit de gaz ajusté qui correspond au signal d'activation ; et/ou
le signal activation est un signal de milliampères dans la plage de 0 à 180 milliampères et le contrôleur de soupape est configuré pour déterminer une valeur de référence d'après le signal d'activation que le contrôleur de soupape utilise pour déterminer le nombre d'étapes de moteur pas à pas pour établir un débit de gaz particulier correspondant au signal d'activation.

15. Unité de soupape de gaz selon la revendication 9, 10, 11, 12, 13 ou 14, comprenant en outre une table de recherche associée au contrôleur de soupape, qui inclut un ensemble de valeurs d'étape de moteur qui correspond à un nombre de valeurs de référence, dans lequel le contrôleur de soupape est configuré pour sélectionner une valeur d'étape de moteur dans la table de recherche qui correspond à la valeur de référence associée au signal d'activation, et dans lequel l'ensemble de valeurs de tension d'entrée correspond à une pluralité de positions de l'élément de soupape pour ajuster le débit de gaz, ladite pluralité de positions allant d'une position d'écoulement à capacité complète à un écoulement à capacité minimale.
